# EUROPEAN PATENT APPLICATION

(11) **EP 4 289 503 A1**
(43) Date of publication of application: **13.12.2023**
(21) Application number: 22177906.9
(22) Date of filing: 08.06.2022
(51) Int. Cl.: B01J 20/26, B01D 53/02, B01J 20/32, C08G 73/02

(54) **SORBENT MATERIALS FOR CARBON DIOXIDE SEPARATION**

(71) Applicant: ZHAW - Zürcher Hochschule für Angewandte Wissenschaften, 8401 Winterthur (CH)
(72) Inventor: Maeda, Nobutaka, 8401 Winterthur (CH); Meier, Daniel M., 8401 Winterthur (CH); Weisshar, Florian, 8401 Winterthur (CH); Hack, Jannis, 8401 Winterthur (CH); Gnehm, Japhet, 8401 Winterthur (CH); Elkaz, Adnan, 8401 Winterthur (CH)
(74) Representative: E. Blum & Co. AG

(57) **Abstract**

The present invention relates to a sorbent material for separation, preferably isothermal separation, of carbon dioxide from a gas mixture. Said sorbent material comprises either a crosslinked and substituted branched polyethylenimine containing a substituent -CH₂-R substituting an amine nitrogen and a linker moiety -L- connecting amine nitrogens, or a solid support impregnated with or coated with a substituted branched polyethylenimine containing a substituent -CH₂-R substituting an amine nitrogen. The present invention further provides processes of manufacturing the sorbent materials and methods of separation of carbon dioxide from a gas mixture using said sorbent materials.

## Description

### FIELD OF THE INVENTION

The present invention relates to the technical field of sorbent materials for separating carbon dioxide from a gas mixture, methods for manufacturing said materials and methods for separating carbon dioxide from a gas mixture using said sorbent materials.

### BACKGROUND OF THE INVENTION

The growing global warming threats caused by anthropogenic carbon dioxide (CO₂) emissions are increasingly dictating the need for a radical shift to a more sustainable energy system and environmentally friendly industrial production practices. In this context, the Paris Climate agreement, with the goal to limit global warming to well below 2 °C, recommended implementation of stringent policy measures to incentivize cutting CO₂ emissions.

CO₂ capture technology is considered a vital technology to include in CO₂ emission reduction pathways for cost-effective mitigation of global warming threats. CO₂ capture technology falls into two categories: direct CO₂ capture from the air (ca. 415 ppm CO₂) and CO₂ capture from large point sources, such as large fossil fuel or biomass electricity power plants, industries with major CO₂ emissions, natural gas processing, synthetic fuel plants and fossil fuel-based hydrogen production plants (4-100 % CO₂).

Amines have been intensively used in CO₂ capture technologies. In a first step (capturing or trapping step), amines react with CO₂ to form a carbamate, thereby capturing the CO₂ from the gas mixture. In a second step (regeneration step), the CO₂ is released and the original amines are regenerated, for example by increasing the temperature. Traditionally, liquid amine scrubbing has been employed for CO₂ capture. This CO₂ capturing system has several drawbacks, such as loss of volatile amine, corrosion, high-energy consumption in the regeneration step, and high cost (62.8 USD/tCO₂), which have prompted industries to look for alternative capturing systems.

Solid CO₂ adsorbents, hereafter named sorbents or sorbent materials, such as mesoporous oxides, zeolites, and metal-organic frameworks (MOFs) have been described as alternative to liquid amines, due to their feasibility for desorbing CO₂ from a material surface by simply heating the material and their long-term operation without exchanging the solid adsorbent, which led to a lowering of the costs for CO₂ capturing. Independently of the regeneration method (e.g. temperature swing, pressure swing), a high amount of energy is required for heating the material during the regeneration step of the sorbent. As a consequence, the energy input of such CO₂ capturing systems is higher than the one of the liquid amine scrubbing. Thus, the CO₂ capturing methods relying upon such sorbent materials contribute to CO₂ emission and are unfortunately not carbon neutral. Among these sorbent materials, amine-functionalized porous materials are of particular interest owing to their high adsorption capacity and simple synthetic procedure based on wet impregnation. Typically, the regeneration step of such sorbents requires high regeneration temperature ranging from 80 °C to 100 °C. Hence, despite the advantages provided by the use of such sorbents in CO₂ capturing systems, such materials do not solve the problem of high energy input and the CO₂ separation methods relying upon the use of such materials are not carbon neutral.

Lowering the regeneration temperature for the solid adsorbent has a significant contribution to the decrease in the energy input and the total cost of the CO₂ capturing system, especially when long-term operation is considered without exchanging the solid adsorbent. Hack et al. (Energies 2022, 15, 1075) described the use of silica adsorbents impregnated with linear polyethylenimine (30 wt-%, 60 wt-%) and branched polyethylenimine (30 wt-%), respectively as CO₂ capturing materials with CO₂ desorption temperatures lower than 80 °C.

A need remains for CO₂ sorbents having lowered desorption temperatures that can be used in environmentally friendly CO₂ separation systems with low operating costs and low energy consumption, as well as for processes for manufacturing such CO₂ sorbents, and methods for separation CO₂ from a gas mixture that are more environmentally friendly and more cost efficient than the existing separation methods.

### SUMMARY OF THE INVENTION

Accordingly, it is an object of the present invention to provide sorbent materials with low desorption temperature between ambient temperature and 70 °C for use in separating, preferably by isothermal separation, carbon dioxide from a gas mixture, such as ambient atmospheric air, flue gas and biogas. The object is achieved by the sorbent material according to claim 1.

Also claimed and described herein is a unit for separation, preferably isothermal separation, of carbon dioxide from a gas mixture, comprising a reactor unit containing the sorbent material claimed and described herein. In an embodiment, the unit further comprises at least one additional reactor unit containing the sorbent material, and the separation, preferably the isothermal separation, is continuous.

Also claimed and described herein is a substituted branched polyethylenimine for producing the sorbent material with lower desorption temperature.

A further aspect according to the present invention is directed to a process for manufacturing the sorbent material with low desorption temperature between ambient temperature and 70 °C, and a sorbent material obtained by said manufacturing process.

An additional aspect according to the present invention relates to a method for separation of carbon dioxide from a gas mixture, such as ambient atmospheric air, flue gas and biogas, using the sorbent materials claimed and described herein.

### SHORT DESCRIPTION OF THE FIGURES

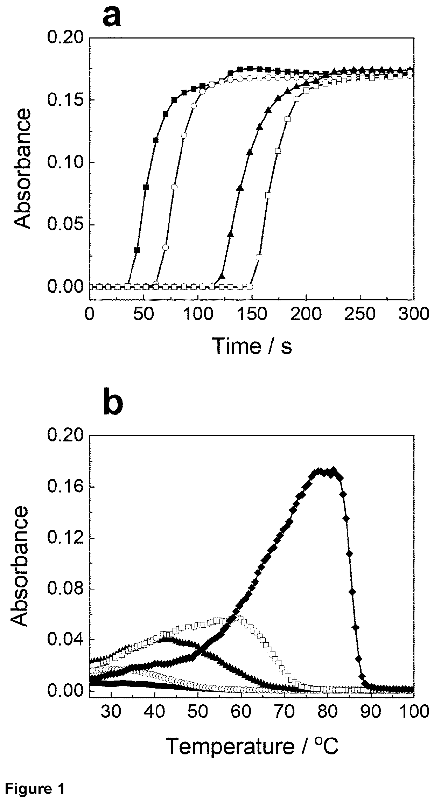

**Figure 1** shows the CO₂ breakthrough curves during CO₂ capture at 25 °C (a) and the temperature programmed (TPD) profiles (b) of sorbent materials according to the present invention (30 wt-% BPEI-EHA/SiO₂ (BPEI 1800) at a degree of substitution of ( 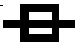 ) 9.1, ( 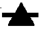 ) 18.2, ( 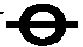 ) 24.5 and ( 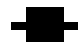 ) 36.4), and a comparative sorbent material (( 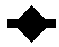 ) 30 wt-% BPEI/SiO₂).

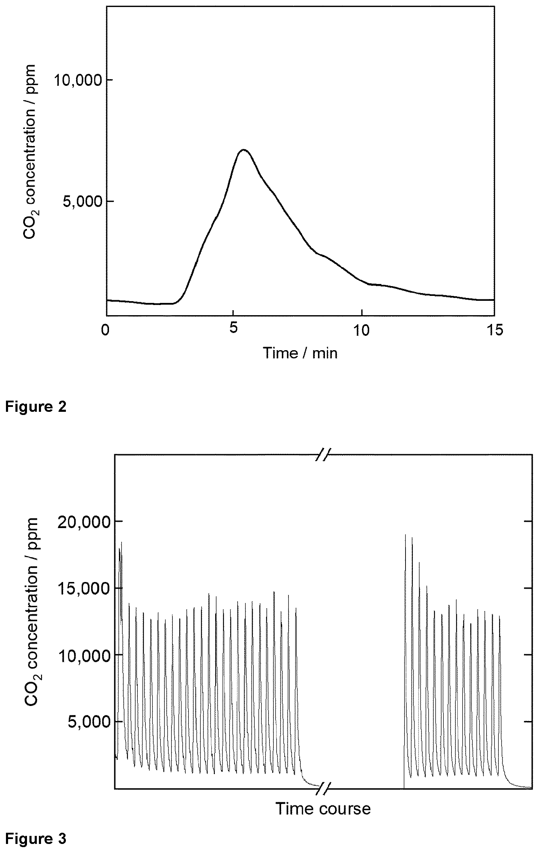

**Figure 2** shows isothermal CO₂ adsorption and desorption at 60 °C under dry condition using 1 g of a sorbent material according to the present invention (BPEI cross-linked with BDDA and substituted with EHA (weight ratio of the BPEI residues to the BDDA moiety = 70:30; EHA substitution degree of 12.7 %)): CO₂ adsorption in the first 2.5 min, followed by desorption for 12.5 min.
**Figure 3** shows repeated cycles of isothermal adsorption and desorption conducted with a sorbent material according to the present invention (BPEI cross-linked with BDDA and substituted with EHA (weight ratio of the BPEI residues to the BDDA moiety = 70:30; EHA substitution degree of 12.7 %)). After 25 cycles, the sorbent material was exposed to the air at 60 °C for 7 days, followed by another 14 cycles of isothermal adsorption and desorption.

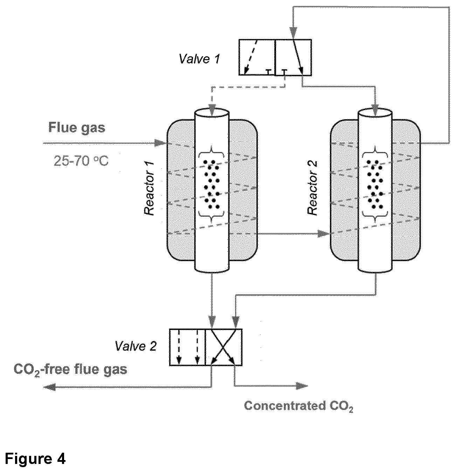

**Figure 4** shows an example of a unit for continuous separation of carbon dioxide from a flue gas using the heat of the flue gas, wherein reactor 1 operates for CO₂ adsorption and reactor 2 operates for regeneration of the sorbent material. For isothermal separation, the heat of the flue gas can be utilized to heat up the reactor in which the regeneration of the sorbent material takes place. Consequently, no additional heater or energy input is required in the regeneration process.

### DETAILED DESCRIPTION OF THE INVENTION

It is an object of the present invention to address this need. The objective is achieved by a sorbent material according to claim 1, a substituted branched polyethylenimine for producing the sorbent material according to claim 9, a process for manufacturing the sorbent material according to claim 10, a sorbent material obtained by said process, a unit for separation according to claim 12, and a method for separation according to claim 14. Preferred embodiments are disclosed in the specification and the dependent claims.

The present invention will be described in more detail below.

Where the present description refers to "preferred" embodiments/features, combinations of these "preferred" embodiments/features are also deemed to be disclosed as long as the specific combination of the "preferred" embodiments/features is technically meaningful.

Unless otherwise stated, the following **definitions** shall apply in this specification:
As used herein, the term "a", "an", "the" and similar terms used in the context of the present invention (especially in the context of the claims) are to be construed to cover both the singular and plural unless otherwise indicated herein or clearly contradicted by the context.

As used herein, the term "and/or" means that either all or only one of the elements of said group may be present. For example, "A and/or B" means "only A, or only B, or both A and B". In the case of "only A", the term also covers the possibility that B is absent, i.e. "only A, but not B".

As used herein, the terms "including", "containing" and "comprising" are used herein in their open-ended, non-limiting sense. It is understood that the various embodiments, preferences and ranges may be combined at will. Thus, for instance a solution comprising a compound A may include other compounds besides A. However, the term "comprising" also covers, as a particular embodiment thereof, the more restrictive meanings of "consisting essentially of" and "consisting of, so that for instance "a solution comprising A, B and optionally C" may also (essentially) consist of A and B, or (essentially) consist of A, B and C. As used herein, the transitional phrase "consisting essentially of" (and grammatical variants) is to be interpreted as encompassing the recited materials or steps and those that do not materially affect the basic and novel characteristic(s) of the claimed invention. Thus, the term "consisting essentially of" should not be interpreted as equivalent of "comprising".

As used herein, the term "about" means that the amount or value in question may be the specific value designated or some other value in its neighborhood. Generally, the term "about" denoting a certain value is intended to denote a range within ± 5 % of the value. As one example, the phrase "about 100" denotes a range of 100 ± 5, i.e. the range from 95 to 105. Preferably, the range denoted by the term "about" denotes a range within ± 3 % of the value, more preferably ± 1 %. Generally, when the term "about" is used, it can be expected that similar results or effects according to the invention can be obtained within a range of ±5 % of the indicated value.

Surprisingly, it has been found that a sorbent material comprising
(a) a cross-linked and substituted branched polyethylenimine containing:
   - residues of a branched polyethylenimine;
   - a substituent -CH₂-R substituting an amine nitrogen contained by said residues, wherein -R is selected from the group consisting of -CH₂C≡N, and -CHR¹C(O)OC₄-C₁₂-alkyl, with R¹ being selected from hydrogen and methyl; and
   - a linker moiety -L- connecting amine nitrogens contained by said residues, wherein the linker moiety -L- is selected from the group consisting of 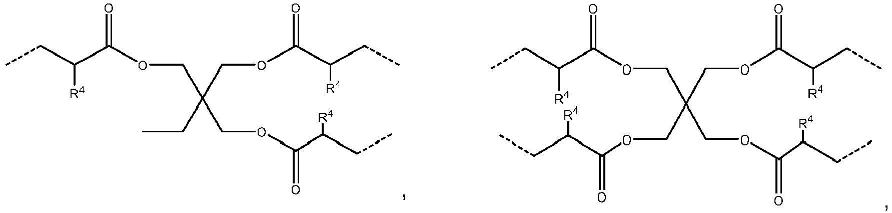 and 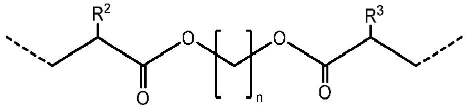 with n being an integer from 4 to 12, and R², R³ and R⁴ being independently of each other selected from hydrogen and methyl; and
      having a weight ratio of said residues to said linker moiety -L- from about 9:1 to about 6:4;
      or
(b) a solid support impregnated with or coated with a substituted branched polyethylenimine containing a residue of a branched polyethylenimine and a substituent -CH₂-R substituting an amine nitrogen contained by said residue,
   wherein -R is selected from the group consisting of -CH₂C≡N, and -CHR¹C(O)OC₄-C₁₂-alkyl, with R¹ being selected from hydrogen and methyl,
   wherein preferably the solid support is present in said sorbent material in an amount from about 40 wt-% to about 80 wt-%, preferably from about 50 wt-% to about 80 wt-%, more preferably from about 50 wt-% to about 70 wt-%,
   presents low desorption temperature between ambient temperature and 70 °C and is useful for separating, preferably by isothermal separation, carbon dioxide from a gas mixture, such as ambient atmospheric air, flue gas and biogas. The separation of the CO₂ from a gas mixture involves in a first step adsorption of the CO₂ from said gas mixture on the sorbent material and in a second step desorption of the CO₂ from the sorbent material and regeneration of the sorbent material, which can be achieved by temperature swing, pressure swing and/or dilution with an effluent. The sorbent material claimed and described herein enables that the second step takes place at a temperature between ambient temperature and 70 °C, and preferably at the same temperature at which the adsorption step takes place (isothermal separation). As generally, the temperature of gas mixtures, such as ambient atmospheric air, flue gas is between ambient temperature and 70 °C, the sorbent material according to the present invention is particularly useful for isothermal separation.

In the present patent application, the terms "capturing", "capture", "separation", and "separating" are used interchangeably.

The term "desorption temperature" as used herein refers to the peak centrum of the temperature programmed desorption (TPD) profile, wherein the TPD profile is obtained by heating the sorbent material with adsorbed carbon dioxide from 25 °C up to 100 °C with a heating rate of 5 °C/min in a helium flow of 200 mL/min and monitoring the concentration of CO₂ released from the sample by Fourier transform infrared (FT-IR) spectroscopy using a FT-IR spectrometer (Bruker, Billerica, MA, USA, ALPHA) with a gas cell module, wherein the IR absorption band of gaseous CO₂ centered at 2357 cm⁻¹ was monitored at every 10 s with the spectral resolution of 16 cm⁻¹, 8 scans per spectrum, and the scanning velocity of 7.5 kHz in the region of 2000-2500 cm⁻¹.

As used herein, the terms "sorbent" and "sorbent material" refer to a CO₂ solid adsorbent.

The term "gas mixture" encompasses any gas mixture containing gaseous carbon dioxide, as well as further gases different from carbon dioxide. Examples of such gas mixtures include but are not limited to, ambient atmospheric air, flue gas and biogas.

As used herein, the term "ambient temperature" refers to a temperature of about 25 °C.

As well known to a skilled person, a branched polyethylenimine, abbreviated BPEI, is a polyethylenimine containing primary, secondary and tertiary amino groups. The BPEI described herein has preferably a ratio of the primary amino groups to secondary amino groups to tertiary amino groups (primary amino groups : secondary amino groups : tertiary amino groups) of approximatively 4:3:4. In other words, the BPEI described herein has preferably a ratio of the amine hydrogens (i.e. the hydrogens contained by the primary and secondary amino groups of said BPEI) to the amine nitrogens (i.e. the nitrogens contained by the primary, secondary and tertiary amino groups of said BPEI) of approximately 1:1. Preferably, the branched polyethylenimine (BPEI) has an average number molecular weight Mn from about 500 to about 11000 as determined by gel permeation chromatography.

As used herein, the expressions "residue of a branched polyethylenimine", "residue of a BPEI", and "BPEI residue" refer to a branched polyethylenimine (BPEI) as described herein lacking amine hydrogens on its primary and secondary amino moieties. In the cross-linked and substituted branched polyethylenimine claimed and described herein a percentage of the amine hydrogens are replaced by the linker moiety -L- described herein to connect amine nitrogens contained by said residues and the substituent -CH₂-R described herein. In the substituted branched polyethylenimine claimed and described herein a percentage of the amine hydrogens are replaced by the substituent -CH₂-R as described herein. The percentage of amine hydrogens replaced by the substituent -CH₂-R is hereafter referred as "substitution degree" and is calculated taking into account that BPEI contains in average 11 hydrogen atoms per repeating unit (MW = 473.75 g/mol) originating from 4 primary amino moieties and 3 secondary amino moieties (the structure of the BPEI was confirmed by NMR analysis) and the amount of BPEI and substitution reagent used in the substitution reaction.

As well-known to the skilled person a C₄-C₁₂-alkyl refers to an alkyl group having 4 to 12 carbon atoms. The C₄-C₁₂-alkyl group may be linear (e.g.: n-butyl) or branched (e.g.: 2-ethylhexyl).

As used herein, an integer from 4 to 12 refers to an integer selected from 4, 5, 6, 7, 8, 9, 10, 11 and 12.

In a preferred embodiment according to the present invention, the sorbent material claimed and described herein comprises a cross-linked and substituted branched polyethylenimine containing:
- residues of a branched polyethylenimine;
- a substituent -CH₂-R substituting an amine nitrogen contained by said residues, wherein -R is selected from the group consisting of -CH₂C=N, and -CHR¹C(O)OC₄-C₁₂-alkyl, with R¹ being selected from hydrogen and methyl; and
- a linker moiety -L- connecting amine nitrogens contained by said residues, wherein the linker moiety -L- is selected from the group consisting of 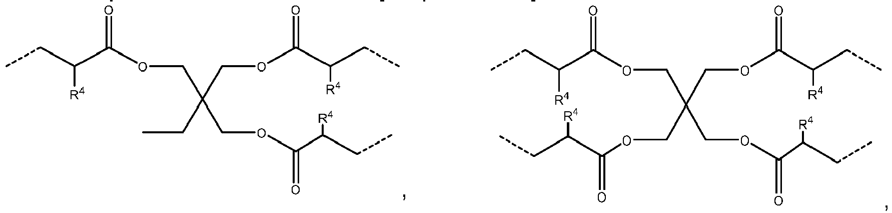 and 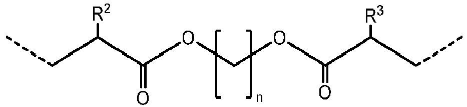 with n being an integer from 4 to 12, and
   R², R³ and R⁴ being independently of each other selected from hydrogen and methyl. The cross-linked and substituted BPEI claimed and described herein is characterized by a weight ratio of the BPEI residues to the linker moiety -L- from about 9:1 to about 6:4, preferably from about 8.5:1.5 to about 6.5:3.5, more preferably from about 8:2 to about 7:3. As well known to the skilled person and used herein the weight ratio of the BPEI residues to the linker moiety -L- refers to the ratio between the total weight of the BPEI residues contained by the cross-linked and substituted BPEI and the total weight of the linker moieties -L- contained by the cross-linked and substituted BPEI. The weight ratio of the BPEI residues to the linker moiety -L- is calculated based on the amount of BPEI and cross-linking agent used as starting materials.

In the inventive cross-linked and substituted branched polyethylenimine claimed and described herein, a percentage of the amine hydrogens are replaced by the linker moiety -L-connecting amine nitrogens and the substituent -CH₂-R. The linker moiety -L- connects amine nitrogens present on the same BPEI residue and/or amine nitrogens present on different residues of BPEI, and may be the same or may be different. In a preferred embodiment, the linker moiety -L- is the same. The linker moiety -L- preferably represents -CH₂CHR²C(O)O(CH₂)₄OC(O)CHR³CH₂-.

The substituent -CH₂-R may be the same or different.

The cross-linked and substituted BPEI claimed and described herein may be under a sponge form or under a powder form.

The sorbent material may consist, or consists essentially, of the herein described cross-linked and substituted branched polyethylenimine, or may comprise the cross-linked and substituted branched polyethylenimine and a solid support, wherein the solid support is preferably present in said sorbent material in an amount from about 2.5 wt-% to about 10 wt-%.

In an alternative embodiment, the inventive sorbent material comprises a solid support impregnated with or coated with a substituted branched polyethylenimine containing a residue of a branched polyethylenimine and a substituent -CH₂-R substituting an amine nitrogen contained by said residue, wherein -R is selected from the group consisting of -CH₂C=N, and -CHR¹C(O)OC₄-C₁₂-alkyl, with R¹ being selected from hydrogen and methyl. The substituted branched polyethylenimine described herein has a percentage of its amine hydrogens replaced by the substituent -CH₂-R described herein. The substituent -CH₂-R may be the same or different. Preferably, the solid support is present in said sorbent material in an amount from about 40 wt-% to about 80 wt-%, preferably from about 50 wt-% to about 80 wt-%, more preferably from 50 wt-% to about 70 wt-%. As shown for example in **Table 5,** a decrease of the wt-% of solid support in the sorbent material (i.e. an increase of the wt-% of the substituted BPEI in said sorbent material) results in an increase of the adsorption capacity (mg CO₂ adsorbed per g sorbent material) without significantly impacting the desorption temperature. Hence, depending on the CO₂ concentration in the gas mixture, the sorbent material can be optimized so that it exhibits the appropriate adsorption capacity.

In the sorbent materials claimed and described herein, it is preferred that from about 4 % to about 50 %, preferably from about 5 % to about 45 %, more preferably from about 9 % to about 45 %, much preferably from about 9 % to about 36 %, of the amine hydrogens contained by the branched polyethylenimine are replaced by the substituent -CH₂-R, which may be the same or different. The percentage of amine hydrogens replaced by the substituent -CH₂-R is referred herein also as "substitution degree". As shown for example in **Tables 1, 2** and **4,** an increase in the substitution degree generally results in a decrease of the desorption temperature and a decrease in the adsorption capacity. Hence, a preferred embodiment according to the present invention is directed to a sorbent material for separation, preferably isothermal separation, of carbon dioxide from a gas mixture, said sorbent material comprising, or consisting essentially of: a cross-linked and substituted branched polyethylenimine containing:
- residues of a branched polyethylenimine;
- a substituent -CH₂-R substituting an amine nitrogen contained by said residues, wherein -R is selected from the group consisting of -CH₂C=N, and -CHR¹C(O)OC₄-C₁₂-alkyl, with R¹ being selected from hydrogen and methyl; and
- a linker moiety -L- connecting amine nitrogens contained by said residues, wherein the linker moiety -L- is selected from the group consisting of 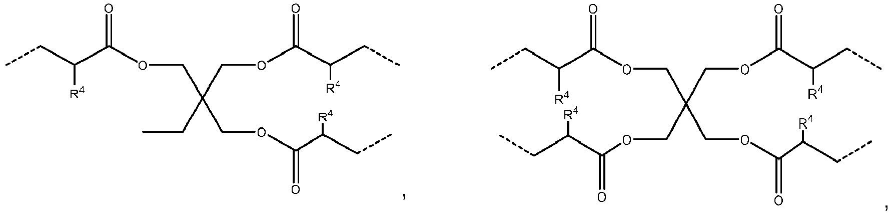 and 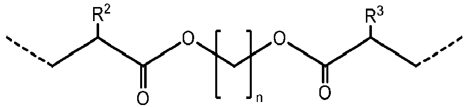 with n being an integer from 4 to 12, and R², R³ and R⁴ being independently of each other selected from hydrogen and methyl; and
   having a weight ratio of said residues to said linker moiety -L- from about 9:1 to about 6:4, preferably from about 8.5:1.5 to about 6.5:3.5, more preferably from about 8:2 to about 7:3, wherein from about 4 % to about 50 %, of the amine hydrogens contained by the branched polyethylenimine are replaced by the substituent -CH₂-R, which may be the same or different.

An alternative preferred embodiment according to the present invention relates to a sorbent material for separation, preferably isothermal separation, of carbon dioxide from a gas mixture comprising, or consisting essentially of, a solid support impregnated with or coated with a substituted branched polyethylenimine containing a residue of a branched polyethylenimine and a substituent -CH₂-R substituting an amine nitrogen contained by said residue,
wherein -R is selected from the group consisting of -CH₂C≡N, and -CHR¹C(O)OC₄-C₁₂-alkyl, with R¹ being selected from hydrogen and methyl, and
wherein from about 4 % to about 50 %, preferably from about 5 % to about 45 %, more preferably from about 9 % to about 45 %, much preferably from about 9 % to about 36 %, of the amine hydrogens contained by the branched polyethylenimine are replaced by the substituent -CH₂-R, which may be the same or different,
wherein preferably the solid support is present in said sorbent material in an amount from about 40 wt-% to about 80 wt-%, preferably from about 50 wt-% to about 80 wt-%, more preferably from about 50 wt-% to about 70 wt-%.

Preferably, the substituent -CH₂-R described herein is selected from the group consisting of -CH₂C≡N, and -CHR¹C(O)OC₄-C₈-alkyl, and more preferably from the group consisting of -CH₂C=N, -CHR¹C(O)OC₄-alkyl and -CHR¹C(O)OC₈-alkyl, with R¹ being selected from hydrogen and methyl, and preferably hydrogen.

A further aspect according to the present invention is directed to a sorbent material for separation, preferably isothermal separation, of carbon dioxide from a gas mixture comprising, or consisting essentially of a solid support impregnated with or coated with a cross-linked branched polyethylenimine containing:
- a residue of a branched polyethylenimine; and
- a linker moiety -L- connecting amine nitrogens contained by said residues, wherein the linker moiety -L- is selected from the group consisting of 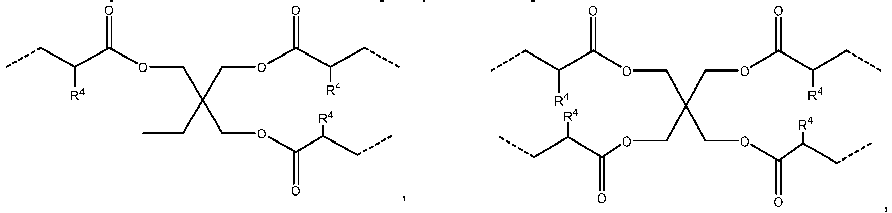 and 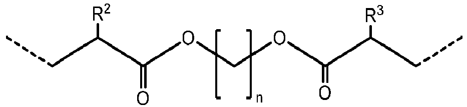 with n being an integer from 4 to 12, and R², R³ and R⁴ being independently of each other selected from hydrogen and methyl; and
   having a weight ratio of said residues to said linker moiety -L- from about 9:1 to about 6:4. Preferably, the sorbent material is obtained by a manufacturing process comprising the following steps:
   a-1) providing a solution of BPEI in methanol, wherein the BPEI has an average number molecular weight Mn from about 500 to about 11000, preferably from about 500 to 10000, as determined by gel permeation chromatography;
   a-2) adding a cross-linking agent to the solution, wherein the cross-linking agent is selected from the group consisting of CH₂=CH(R²)C(O)O(CH₂)ₙOC(O)CH(R³)=CH₂, trimethylolpropane tri(meth)acrylate, pentaerythritol tetra(meth)acrylate, and mixtures thereof, with n being an integer from 4 to 12, and R² and R³ being independently of each other selected from hydrogen and methyl, wherein the weight ratio of the BPEI to the cross-linking agent is from about 9:1 to about 6:4;
   a-3) stirring the mixture obtained at a-2) at about 50 °C for about 1 hour;
   a-4) concentrating the mixture to obtain the cross-linked branched polyethylenimine; and
   a-5) impregnating or coating a solid support as described herein with the cross-linked branched polyethylenimine.

The solid support used in the sorbent materials according to the present invention is preferably porous. The porous solid support may be any type of solid support with which the substituted branched polyethylenimine is chemically compatible and onto which the substituted branched polyethylenimine may be coated or impregnated. Preferably, the solid support is made of silica, alumina, zeolite, active carbon, polymer, or mixtures thereof, more preferably of silica. The solid support may be in form of particulates or fibers. The solid support is preferably a particulate, more preferably a particulate having a particle size (D50) in the range of 0.03-1.0 µm, preferably in the range of 0.1-0.5 µm. Preferably, the particulate is a silica particulate.

A further aspect according to the present invention is directed to a substituted branched polyethylenimine for producing the sorbent material claimed and described herein. The substituted branched polyethylenimine contains a residue of a branched polyethylenimine and a substituent -CH₂-R as described herein substituting an amine nitrogen contained by said residue, wherein -R is selected from the group consisting of -CH₂C≡N, and-CHR¹C(O)OC₄-C₁₂-alkyl, with R¹ being selected from hydrogen and methyl. The substituted BPEI is particularly useful for impregnating or coating a solid support as described herein, preferably a porous solid support, to provide the sorbent material according to the present invention.

The present invention further provides a process for manufacturing the sorbent material claimed herein, said process comprising the following steps:
i) mixing a branched polyethylenimine, a cross-linking agent and a substitution reagent to obtain a mixture, wherein
   the branched polyethylenimine has an average number molecular weight Mn from about 500 to about 11000, preferably from about 500 to about 10000, as determined by gel permeation chromatography;
   the cross-linking agent is selected from the group consisting of CH₂=CH(R²)C(O)O(CH₂)ₙOC(O)CH(R³)=CH₂, trimethylolpropane tri(meth)acrylate, pentaerythritol tetra(meth)acrylate, and mixtures thereof, with n being an integer from 4 to 12, and R² and R³ being independently of each other selected from hydrogen and methyl; and
   the substitution reagent is selected from the group consisting of CH₂=CH-C=N, CH₂=CH-CHR¹C(O)OC₄-C₁₂-alkyl, and mixtures thereof with R¹ being selected from hydrogen and methyl to obtain a cross-linked and substituted branched polyethylenimine; and optionally
ii) grinding the cross-linked and substituted branched polyethylenimine.

In the manufacturing process according to the present invention, the ratio of the amount (gram) of BPEI to the amount (gram) of cross-linking agent used at step i) is from 9:1 to 6:4 so as to provide a cross-linked and substituted sorbent material having a weight ratio of the BPEI residues to the linker moiety -L- from about 9:1 to about 6:4. Sorbent materials having a weight ratio of the BPEI residues to the linker moiety -L- higher than 9:1 or lower than 6:4 exhibit low CO₂ adsorption capacity. Depending on the concentration of the CO₂ in the gas mixture, the temperature of the gas mixture and the desorption temperature, which in case of isothermal separation is equal to the temperature of the gas mixture, the amount (g) of substitution reagent is adjusted to provide a sorbent material with appropriate adsorption capacity and desorption temperature. The amount of substitution reagent is adjusted so that from about 4 % to about 50 %, preferably from about 5% to about 45 %, more preferably from about 9 % to about 45 %, much preferably from about 9% to about 36 %, of the amine hydrogens contained by the branched polyethylenimine are replaced by the substituent -CH₂-R.

The cross-linking agent may be a mixture of cross-linking agents. In this case also, the ratio of the amount (gram) of BPEI to the added amounts (gram) of the different cross-linking agents is of between 9:1 and 6:4.

The branched polyethylenimine, the cross-linking agent and the substitution reagent are mixed until formation of a solid cross-linked and substituted BPEI in a sponge or a powder form. Typically, the reaction time is from one to ten minutes, and depends on the starting materials. Preferably step i) and ii) are conducted at ambient temperature.

The manufacturing process claimed and described herein is versatile and simple, and provides in an expedient manner a variety of sorbent materials having a desorption temperature lower than 70 °C.

In a preferred embodiment, the manufacturing process consists essentially of step i) and ii).

In an alternative embodiment, the manufacturing process further contains a step vi):
vi) mixing the cross-linked and substituted branched polyethylenimine obtained at step ii) with a solid support as described herein to provide a sorbent material. The solid support is present in the sorbent material in an amount from about 2.5 wt-% to about 10-wt%.

An additional aspect according to the present invention is directed to a sorbent material for separation, preferably isothermal separation, of carbon dioxide from a gas mixture, preferably from at least one of ambient atmospheric air, flue gas and biogas, obtained by the manufacturing process claimed and described herein.

Also claimed and described herein is a unit for separation, preferably isothermal separation, of carbon dioxide from a gas mixture, preferably from at least one of ambient atmospheric air, flue gas and biogas, comprising a reactor unit containing the inventive sorbent material for adsorbing the carbon dioxide from said gas mixture and letting flow-through a gas mixture free of carbon dioxide. The unit may additionally contain an inlet for the gas mixture, an outlet for a gas mixture free of carbon dioxide and an outlet for the carbon dioxide.

The separation unit according to the present invention may contain a single reactor unit. Such separation unit is particularly useful for non-continuous separation of carbon dioxide from a gas mixture, such as ambient atmospheric air. In such unit, the adsorption step and desorption step are conducted alternatively i.e. following saturation of the sorbent material with carbon dioxide, the desorption step is conducted by temperature swing, pressure swing and/or dilution with an effluent, preferably by pressure swing and/or dilution with an effluent.

In a preferred embodiment, the separation unit further comprises at least one additional reactor unit, such as two or more reactor units, containing the sorbent material (see for e.g. **Figure 4****).** Such separation unit is particularly useful for continuous separation of carbon dioxide from a gas mixture, such as a flue gas, because it allows that the carbon dioxide adsorption and the carbon dioxide desorption are conducted simultaneously in different reactor units. Specifically, the separation unit allows parallel operation of several reactor units containing the sorbent material, wherein adsorption of carbon dioxide takes place in at least one of the reactor units, and desorption of carbon dioxide takes place in at least one of the reactor units, which is different from the reactor unit where carbon dioxide adsorption takes place, occur simultaneously. The desorption step may be conducted by temperature swing, pressure swing and/or dilution with an effluent, preferably by pressure swing and/or dilution with an effluent.

The present invention further provides a method for separating carbon dioxide from a gas mixture, preferably from at least one of ambient atmospheric air, flue gas and biogas, comprising at least the following steps (iii)-(v) conducted in the order (iii)-(v):
(iii) flowing a gas mixture containing carbon dioxide through a reactor unit containing the sorbent material claimed and described herein, at a first temperature between 0 °C and 70 °C, preferably between ambient temperature and 70 °C, to allow the carbon dioxide to adsorb on the sorbent material in the reactor unit and let flow through a gas mixture free of carbon dioxide;
(iv) isolating said reactor unit containing the carbon dioxide adsorbed on the sorbent material from the gas mixture; and
(v) desorbing the carbon dioxide at a second temperature between ambient temperature and 70 °C.

At step (iii) of the separation method claimed herein, the carbon dioxide contained in said gas mixture is adsorbed on the sorbent material according to the present invention and a gas mixture free of carbon dioxide flows through the sorbent material. Step (iii) is conducted at a first temperature corresponding to the temperature of the gas mixture, which is between 0 °C and 70 °C, preferably between 10 °C and 70 °C, and more preferably between ambient temperature and 70 °C, and preferably at a pressure between 0.5-3 bar, preferably between 1-2 bar.

At step (v), carbon dioxide is desorbed from the sorbent material by temperature swing, pressure swing and/or dilution with an effluent. Step (v) is conducted at a second temperature comprised between ambient temperature and 70 °C.

In a first embodiment, the first temperature is lower than the second temperature and the desorption step (v) involves temperature swing desorption.

In a second, more preferred embodiment, the first temperature, the second temperature and the temperature of the gas mixture flowed through the reactor unit are identical, being between ambient temperature and 70 °C. In this preferred embodiment, the separation is isothermal and step (v) involves pressure swing desorption and/or dilution with a gas effluent, preferably selected from carbon dioxide and nitrogen.

The present invention further provides a use of the sorbent material claimed and described herein for separation, preferably isothermal separation, of carbon dioxide from a gas mixture, preferably from at least one of ambient atmospheric air, flue gas and biogas. The sorbent materials according to the present invention allows that the desorption step is conducted at a predetermined temperature between ambient temperature and 70 °C.

To further illustrate the invention, the following **examples** are provided. These examples are provided with no intend to limit the scope of the invention.

### 1. Materials

All materials used for the examples outlined below were used without further purification. For example, the following chemicals were used.
**Branched polyethylenimine (Mn** = **600) (BPEI 600):** Sigma-Aldrich, CAS 25987-06-88, average number molecular weight Mn determined by gel permeation chromatography.
**Branched polyethylenimine (Mn** = **1800) (BPEI 1800):** Sigma-Aldrich, CAS 9002-98-6, average number molecular weight Mn determined by gel permeation chromatography.
**Branched polyethylenimine (Mn** = **10,000) (BPEI 10000):** Sigma-Aldrich, CAS 9002-98-6, average number molecular weight Mn determined by gel permeation chromatography. **Acrylonitrile:** Sigma-Aldrich, CAS 107-13-1, Purity ≥99 %.
**2-Ethylhexyl acrylate:** Sigma-Aldrich, CAS 103-11-7.
**Butyl acrylate:** Sigma-Aldrich, CAS 141-32-2.
**1,4-butanediol diacrylate:** Sigma-Aldrich, CAS 1070-70-8.
**Trimethylolpropane triacrylate:** Sigma-Aldrich, CAS 15625-89-5.
**Pentaerythritol tetraacrylate:** Sigma-Aldrich, CAS 4986-89-4.
**Fumed silica:** Sigma-Aldrich, CAS 112945-52-5, average particle size 0.2-0.3 µm, 200 m²/g ± 25 m²/g.
**Ethanol anhydrous (denat. with 2** % **IPA** + **2 % MEK):** Acros Organics, CAS 64-17-5, purity 99.8 %.
**Methanol:** Sinopharm, CAS 67-56-1, purity ≥95 %.

### 2. Preparation of sorbent materials for separation of carbon dioxide

### 2.1 Two-step synthesis of sorbent materials for separation of carbon dioxide

### 2.1.1 Substitution of branched polyethylenimine with acrylonitrile (AN), 2-ethylhexyl acrylate (EHA), and/or butyl acrylate (BA)

The reaction was carried out as follows: 1.00 g BPEI was dissolved in 40 mL of methanol. Then a specific amount of AN, EHA or BA was added dropwise over 1-2 minutes with a syringe to the BPEI solution. After complete addition, the mixture was stirred at 25 °C for 10 minutes, and then heated up to 50 °C and stirred for 1 hour. After 1 hour it was cooled down to room temperature and the product was concentrated under reduced pressure at 50 °C to give a colourless, highly viscous liquid of substituted BPEI having the substitution degree specified in **Table 1, 2 and 3.**

### 2.1.2 Cross-linking of branched polyethylenimine with 1,4-butanediol diacrylate (BDDA), trimethylolpropane triacrylate (TPTA) and/or pentaerythritol tetraacrylate (PETA)

The reaction was carried out as follows: 1.00 g BPEI was dissolved in 40 mL of methanol. Then a certain amount of a cross-linking agent (weight ratio between the cross-linking agent and the BPEI between 10:90 and 40:60) was added dropwise over 1-2 minutes with a syringe. After complete addition, the mixture was stirred at 25 °C for 10 minutes, and then heated up to 50 °C and stirred for 1 hour. After 1 hour, it was cooled down to room temperature and the product was concentrated under reduced pressure at 50 °C to give a colourless, highly viscous liquid of cross-linked BPEI.

### 2.1.3 Wet impregnation of a solid support, such as fumed silica with a substituted/cross-linked BPEI

The wet-impregnation was performed as follows: The desired amount of the substituted BPEI prepared as described at 2.1.1 or of the cross-linked BPEI prepared as described at 2.1.2 (usually 0.60 g) was dissolved in 100 mL of methanol. Then the solution was added to the desired amount of fumed silica (usually 1.40 g, equivalent to 30 wt-% substituted/cross-linked BPEI - 70 wt-% solid support). The mixture was then stirred at 45 °C for 15 minutes. Subsequently, the solvent was slowly removed at 50 °C under reduced pressure to provide the sorbent material for capturing of carbon dioxide.

### 2.2 One-pot synthesis of sorbent material for capturing of carbon dioxide (Impregnation onto silica)

One pot synthesis was performed as described at 2.1.1 and 2.1.2, except that instead of concentrating the mixture after the reaction was completed, the reaction mixture was added to the desired amount of silica. This mixture was stirred at 45 °C for 15 minutes and then concentrated under reduced pressure at 50 °C to provide the sorbent material for capturing of carbon dioxide.

### 2.3 One-pot synthesis of sorbent material for capturing of carbon dioxide (Grinding)

A one-pot synthesis based on grinding can be used for producing cross-linked and substituted BPEI. BPEI, and a substitution reagent, such as AN, EHA and/or BA, were mixed in a porcelain mortar together with a cross-linking agent, such as BDDA, TPTA, or PETA. By mixing from one up to ten minutes at room temperature, the liquid mixture becomes a solid cross-linked and substituted polymer in a sponge-like structure or a powder-like structure. The solid cross-linked and substituted polymer may be further subjected to a grinding step. The solid cross-linked substituted polymer can be used directly as a sorbent material or mixed with a solid support, such as fumed silica.

### 3. Performance of CO₂ adsorption and desorption (regeneration)

The adsorption and desorption performance of the sorbent materials prepared as described at section 2 were evaluated in the following adsorption/desorption experiment

### 3.1 Experimental procedure

**Adsorption:** 200 mg of the sorbent material to be evaluated was placed inside a plug-flow reactor and then preheated up to 100 °C for 10 minutes in a helium flow of 200 mL/min to remove adsorbed CO₂ and H₂O. Afterwards the reactor was cooled down to 25 °C. Then the flow of pure He was switched to 5000 ppm CO₂ in He balance at a flow of 200 mL/min. Experiments under humid conditions were operated with a relative humidity (RH) of 100% (dew point: 25 °C). At the same time, the off-gas analysis was carried out by infrared spectroscopy using a FT-IR spectrometer (Bruker, Billerica, MA, USA, ALPHA) with a gas cell module to monitor the concentration of CO₂ at the outlet. The IR absorption band of gaseous CO₂ centered at 2357 cm⁻¹ was monitored at every 10 s with the spectral resolution of 16 cm⁻¹, 8 scans per spectrum, and the scanning velocity of 7.5 kHz in the region of 2000-2500 cm⁻¹. When the CO₂ concentration at the outlet reached 5000 ppm, the gas flow was switched back to pure He again for temperature programmed desorption (TPD) experiments.

The adsorption capacity (mg/g) corresponding to the amount of CO₂ (mg) per sorbent material used (g) was determined for each of the samples. The results are depicted in the Tables 1 - 6. **Figure 1 (a)** shows for illustrative purposes the breakthrough curves during CO₂ capture of sorbent materials according to the present invention (30 wt-% BPEI-EHA/SiO₂ (BPEI 1800) at different degrees of substitution prepared as described at 2.1, and 30 wt-% BPEI/SiO₂ used for comparative purpose (prepared *via* wet impregnation).

**Desorption:** After the adsorption measurements, the sample was heated from 25 °C up to 100 °C with a heating rate of 5 °C/min in a He flow of 200 mL/min. The temperature was then kept at 100 °C for 10 minutes before the reactor was cooled down to room temperature again. The concentration of CO₂ released from the sample was monitored by FT-IR spectroscopy using a FT-IR spectrometer (Bruker, Billerica, MA, USA, ALPHA) with a gas cell module. The IR absorption band of gaseous CO₂ centered at 2357 cm⁻¹ was monitored at every 10 s with the spectral resolution of 16 cm⁻¹, 8 scans per spectrum, and the scanning velocity of 7.5 kHz in the region of 2000-2500 cm⁻¹.

The desorption temperature (°C) corresponding to the peak center of the TPD profile was determined for each sample. The results are depicted in the **Tables 1-6.**

**Figure 1 (b)** shows the temperature programmed (TPD) profiles of sorbent materials according to the present invention (30 wt-% BPEI-EHA/SiO₂ (BPEI 1800) at a degree of substitution of ( 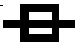 ) 9.1, ( 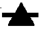 ) 18.2, ( 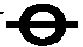 ) 24.5 and ( 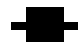 ) 36.4 prepared as described at 2.1, and ( 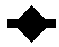 ) 30 wt-% BPEI/SiO₂ used for comparative purpose (prepared via wet impregnation).

### 3.2 BPEI-AN/SiO₂

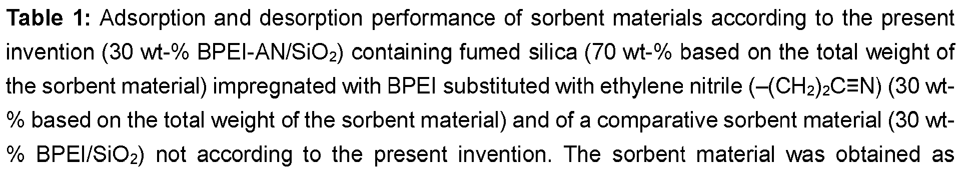

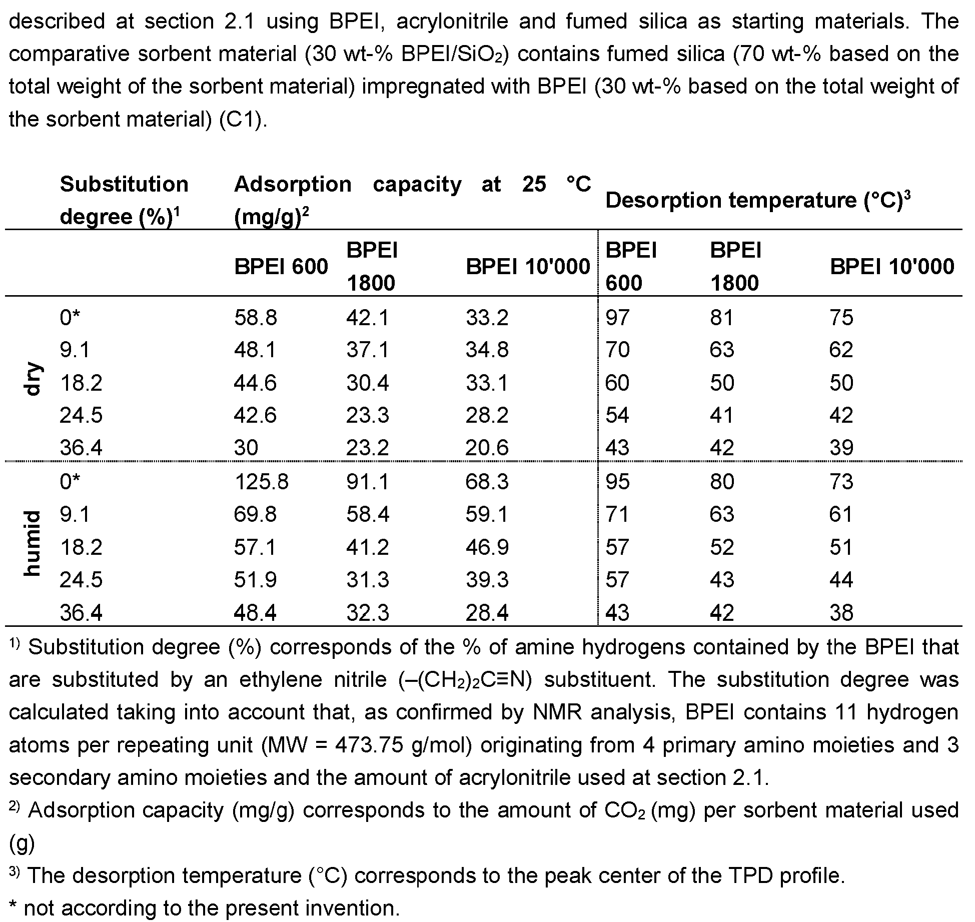

As shown in Table 1, substitution of the amino residues on the branched BPEI with ethylene nitrile (-(CH₂)₂C≡N) decreases the desorption temperature in the sorbent material, while maintaining CO₂ adsorption capacities that are acceptable for CO₂ capturing from a gas mixture, such as flue gas and ambient atmospheric air. The desorption temperature can be decreased by increasing the substitution degree on the BPEI and/or increasing the average number molecular weight of the BPEI. The desorption temperature can be customized as a function of the temperature of the gas mixture from which CO₂ is to be separated, which in the case of the flue gas is generally lower than 70 °C, to provide a sorbent material for CO₂ separation from gas mixtures. The sorbents materials according to the present invention are particularly suitable for isothermal capturing of CO₂ from flue gas and ambient atmospheric air.

### 3.3 BPEI-EHA/SiO₂

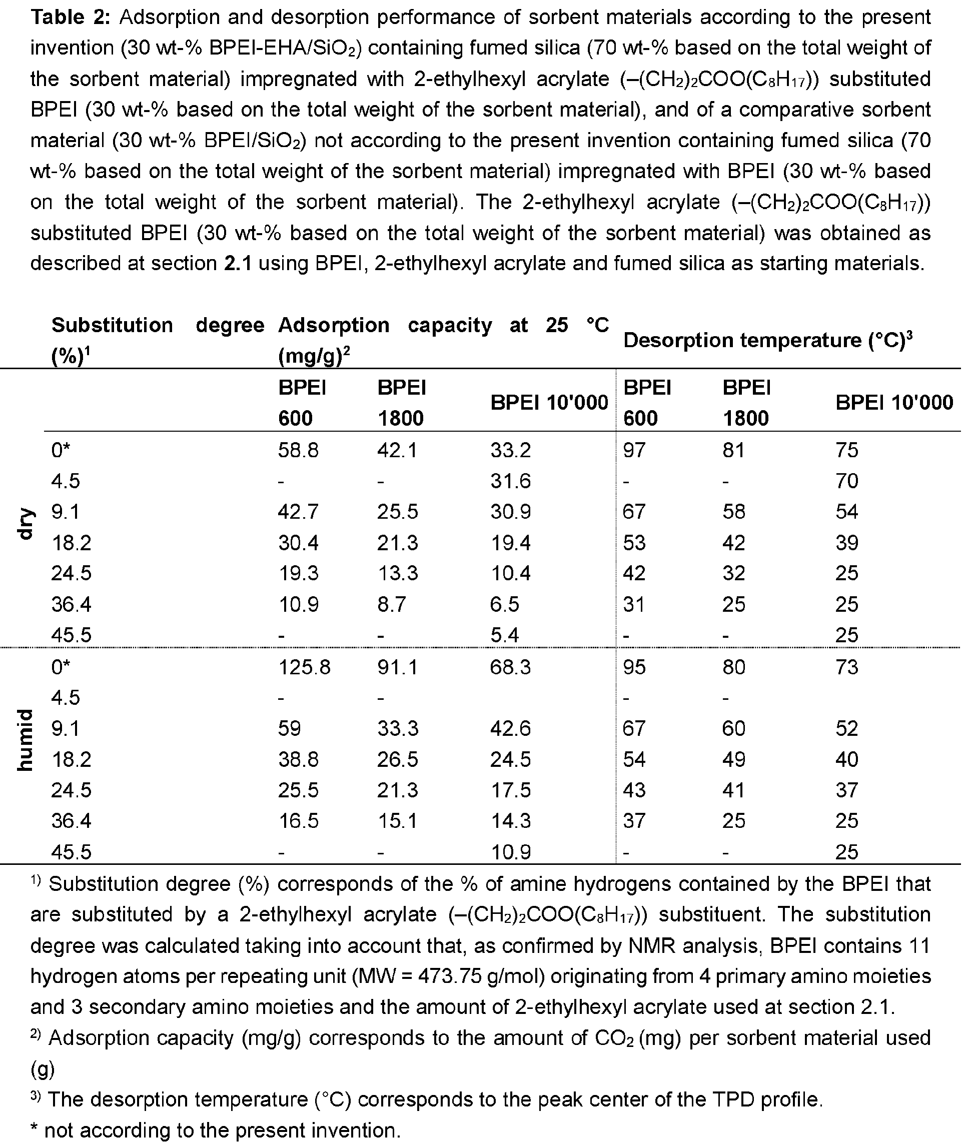

As shown in Table 2, substitution of the amino residues on the branched BPEI with 2-ethylhexyl acrylate decreases the desorption temperature in the sorbent material, while maintaining CO₂ adsorption capacities that are acceptable for CO₂ capturing from a gas mixture, such as flue gas and ambient atmospheric air. The desorption temperature can be decreased by increasing the substitution degree on the BPEI and/or increasing the average number molecular weight of the BPEI. The desorption temperature can be customized as a function of the temperature of the gas mixture from which CO₂ is to be separated, which in the case of the flue gas is generally lower than 70 °C, to provide a sorbent material for CO₂ separation from gas mixtures. The sorbents materials according to the present invention are particularly suitable for isothermal capturing of CO₂ from flue gas and ambient atmospheric air.

### 3.4 BPEI-BA/SiO₂

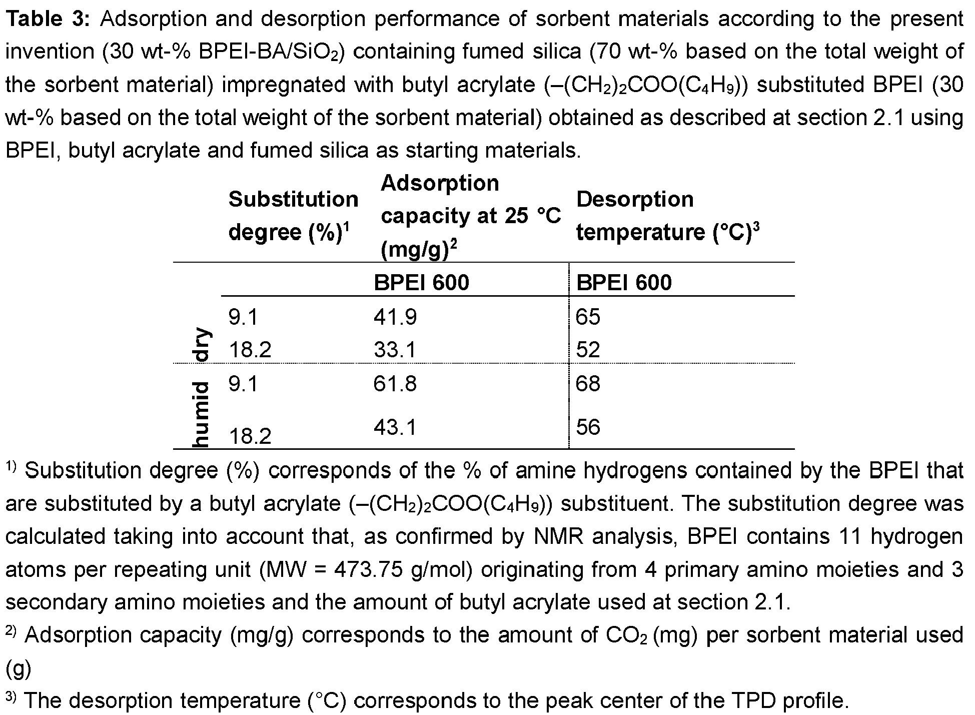

As shown in Table 3, substitution of the amino residues on the branched BPEI 600 with butyl acrylate decreases the desorption temperature in the sorbent material, while maintaining CO₂ adsorption capacities that are acceptable for CO₂ capturing from a gas mixture, such as flue gas and ambient atmospheric air. The desorption temperature can be decreased by increasing the substitution degree on the BPEI. The desorption temperature can be customized as a function of the temperature of the gas mixture from which CO₂ is to be separated, which in the case of the flue gas is generally lower than 70 °C, to provide a sorbent material for CO₂ separation from gas mixtures. The sorbents materials according to the present invention are particularly suitable for isothermal capturing of CO₂ from flue gas and ambient atmospheric air.

### 3.5 BPEI-BDDA/SiO₂

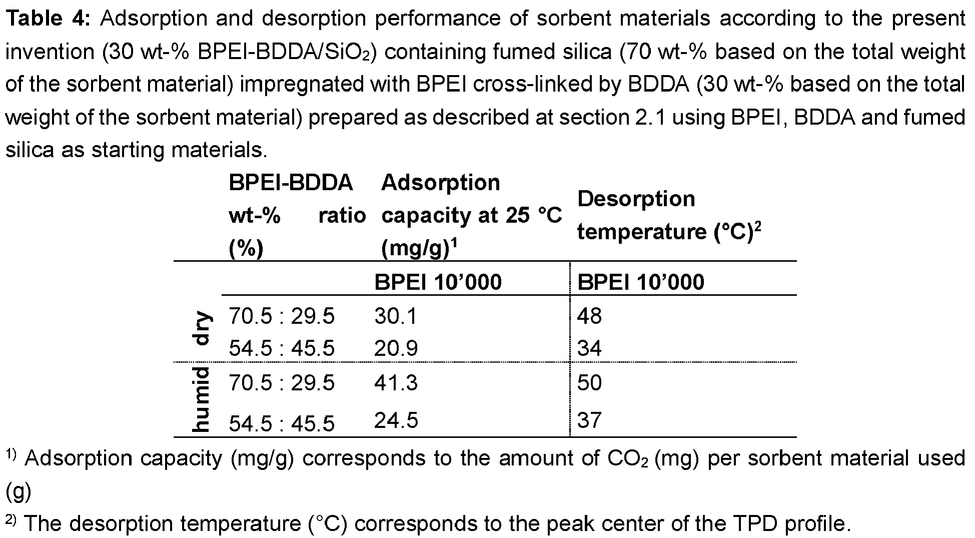

As shown in Table 4, decreasing the weight ratio of the BPEI residues to the linker moieties -CH₂CH₂C(O)O(CH₂)₄OC(O)CH₂CH₂-from 70.5 : 29.5 to 54.5 : 45.5 in the branched BPEI 10'000 decreases the desorption temperature in the sorbent material, while maintaining CO₂ adsorption capacities that are acceptable for CO₂ capturing from a gas mixture, such as flue gas and ambient atmospheric air.

### 3.6. BPEI-EHA/SiO₂ (one-pot synthesis)

To evaluate the influence of the wt-% of substituted BPEI in the sorbent material on the adsorption/desorption performance of said sorbent material, sorbent materials according to the present invention (30 wt-% BPEI-EHA/SiO₂, 40 wt-% BPEI-EHA/SiO₂, and 50 wt-% BPEI-EHA/SiO₂) containing different wt-% (30 wt-%, 40 wt-% and 50 wt-%, respectively) of substituted BPEI 10000 impregnated on fumed silica were prepared as described at section 2.2 using BPEI 10000, 2-ethylhexyl acrylate (EHA) and fumed silica as starting materials. The substituted BPEI has a substitution degree of 6.4% and 12.7%, respectively. The results are depicted in Table 5.

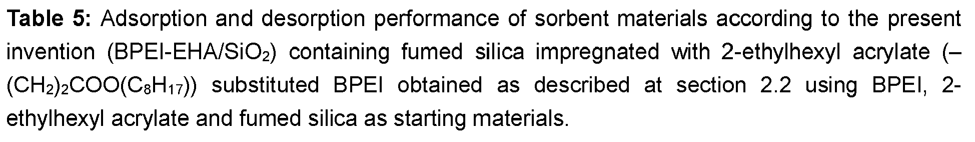

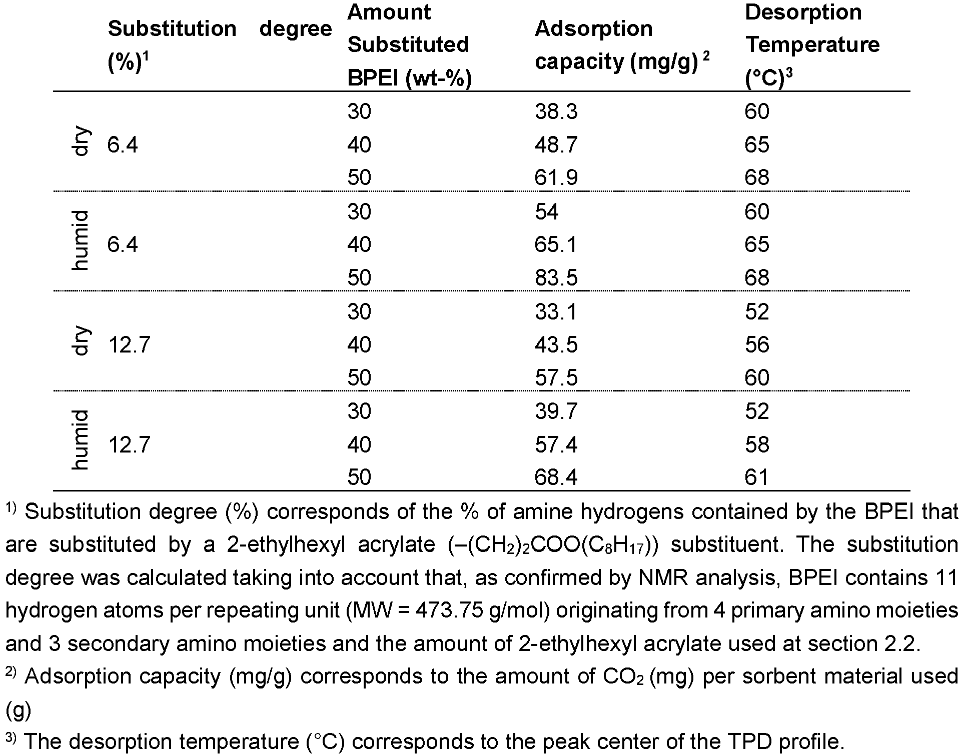

As shown in **Table 5,** being independent of the substitution degree, an increase in the wt-% of the substituted BPEI in the sorbent material results in a significant increase in the adsorption capacity of the sorbent material, while not significantly impacting the desorption temperature.

### 3.7. Substituted and cross-linked BPEI (one-pot synthesis)

**Table 6: Adsorption and desorption performance under humid condition of sorbent materials according to the present invention (BPEI substituted with EHA and cross-linked by a linker moiety) obtained as described at section 2.3 using BPEI, EHA and different cross-linking agents as starting materials.**

| Cross-linking reagent | BPEI-Linker wt-% ratio (%)⁴ | Substitution degree (%)¹ | Adsorption capacity (mg/g)² | Desorption temperature(°C)³ |
|---|---|---|---|---|
| BDDA | 90:10 | 12.7 | 35.2 | 65 |
| BDDA | 80:20 | 12.7 | 123.5 | 60 |
| BDDA* | 80:20 | 0 | 225.0 | 105 |
| BDDA | 70:30 | 12.7 | 96.5 | 58 |
| BDDA | 60:40 | 12.7 | 66.3 | 58 |
| TPTA | 80-20 | 12.7 | 98.5 | 58 |
| PETA | 80-20 | 12.7 | 82.8 | 56 |

| | | | | |
|---|---|---|---|---|
| ¹⁾ Substitution degree (%) corresponds of the % of amine hydrogens contained by the BPEI that are substituted by a 2-ethylhexyl acrylate (-(CH₂)₂COO(C₈H₁₇)) substituent. The substitution degree was calculated taking into account that, as confirmed by NMR analysis, BPEI contains 11 hydrogen atoms per repeating unit (MW = 473.75 g/mol) originating from 4 primary amino moieties and 3 secondary amino moieties and the amount of 2-ethylhexyl acrylate used at section 2.2. ²⁾ Adsorption capacity (mg/g) corresponds to the amount of CO₂ (mg) per sorbent material used (g) ³⁾ The desorption temperature (°C) corresponds to the peak center of the TPD profile. ⁴⁾ The weight ratio of the BPEI residues to the linker moieties (BPEI-Linker wt-% ratio) was calculated taking into account the amounts of BPEI and cross-linking agent used during the preparation. * not according to the present invention. | | | | |

As shown in Table 6, all BPEI-BDDA substituted with EHA show good to very good adsorption capacity and a desorption temperature between 56 °C and 65 °C. Unsubstituted BPEI-BDDA (80:20) presented only for comparative purposes showed excellent adsorption capacity, but its desorption temperature was 105 °C. Similar results are obtained when TPTA and PETA are used as cross-linking agents. The vapor pressure of PETA is low, such that its use as cross-linking reagent is preferred in regard with human health and environmental protection.

### 4. Durability test

**Adsorption-desorption cycle:** 1 g of the sorbent material sorbent materials according to the present invention (BPEI cross-linked with BDDA and substituted with EHA (weight ratio of the BPEI residues to the BDDA moiety = 70:30; EHA substitution degree of 12.7 %)) obtained as described at section 2.3 using BPEI, EHA and BDDA as starting materials was placed inside a plug-flow reactor and then preheated up to 100 °C for 30 minutes in a helium flow of 200 mL/min to remove adsorbed CO₂ and H₂O. Afterwards the reactor was cooled down to 60 °C. Then the flow of pure He was switched to 5000 ppm CO₂ in He balance at a flow of 200 mL/min under dry condition. At the same time, the off-gas analysis was carried out by a quadrupole mass spectrometer (Pfeiffer Vacuum, Asslar, Germany, OmniStar^{®}) with a secondary electron multiplier (SEM) detector to monitor the concentration of CO₂ at the outlet. The ion current of m/z = 44 (CO₂) was monitored at every 213 ms with the dwelling time of 200 ms and the SEM voltage of 1200. After 2.5 min of CO₂ capturing, the gas flow was switched to pure He to isothermally desorb CO₂ at the same temperature (60 °C) for 12.5 min. The cycling of capturing-regeneration was repeated 25 times. Afterwards, the sorbent material was exposed to the static air at 60 °C for 7 days, and then tested again for the repeated capturing-regeneration cycles 14 times at 60 °C.

**Figure 2** shows that the isothermal operation was demonstrated. The first 2.5 min is the period for CO₂ capturing at 60 °C where all the CO₂ was adsorbed in the sorbent material, prepared as described at 2.3. The next 12.5 min is the regeneration period operated isothermally at 60 °C. CO₂ can be efficiently released at 60 °C, which confirms the validation of the isothermal operation. **Figure 3** shows that the sorbent material according to the present invention, prepared as described at 2.3 is stable during the isothermal operation at 60 °C. There was no deterioration in performance observed after 7 days of exposure to the air at 60 °C.

## Claims

1. A sorbent material for separation, preferably isothermal separation, of carbon dioxide from a gas mixture, preferably from at least one of ambient atmospheric air, flue gas and biogas, said sorbent material comprising:
(a) a cross-linked and substituted branched polyethylenimine containing:
- residues of a branched polyethylenimine;
- a substituent -CH₂-R substituting an amine nitrogen contained by said residues, wherein -R is selected from the group consisting of -CH₂C≡N, and -CHR¹C(O)OC₄-C₁₂-alkyl, with R¹ being selected from hydrogen and methyl; and
- a linker moiety -L- connecting amine nitrogens contained by said residues, wherein the linker moiety -L- is selected from the group consisting of 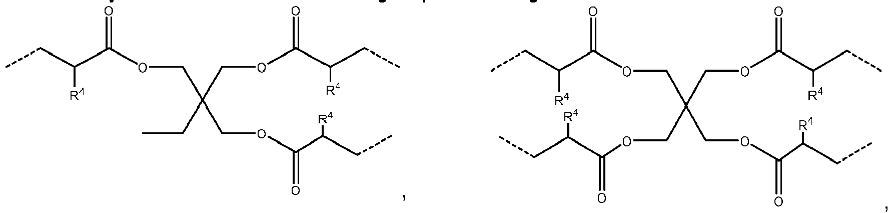 and 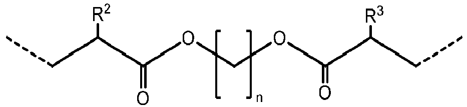 with n being an integer from 4 to 12, and R², R³ and R⁴ being independently of each other selected from hydrogen and methyl; and
having a weight ratio of said residues to said linker moiety -L- from about 9:1 to about 6:4; or
(b) a solid support impregnated with or coated with a substituted branched polyethylenimine containing a residue of a branched polyethylenimine and a substituent -CH₂-R substituting an amine nitrogen contained by said residue,
wherein -R is selected from the group consisting of -CH₂C=N, and -CHR¹C(O)OC₄-C₁₂-alkyl, with R¹ being selected from hydrogen and methyl,
wherein preferably the solid support is present in said sorbent material in an amount from about 40 wt-% to about 80 wt-%.

2. The sorbent material according to claim 1, wherein from about 4% to about 50% of amine hydrogens contained by the branched polyethylenimine are replaced by the substituent -CH₂-R.

3. The sorbent material according to claim 1 or 2, wherein the sorbent material consists essentially of the cross-linked and substituted branched polyethylenimine.

4. The sorbent material according to claim 1 or 2, wherein the sorbent material comprises the cross-linked and substituted branched polyethylenimine and a solid support, wherein the solid support is preferably present in said sorbent material in an amount from about 2.5 wt-% to about 10-wt%.

5. The sorbent material according to any one of claims 1 to 4, wherein the branched polyethylenimine has an average number molecular weight Mn from about 500 to about 11000 as determined by gel permeation chromatography.

6. The sorbent material according to any one of claims 1 to 5, wherein the substituent -CH₂-R is selected from the group consisting of -CH₂C≡N, and -CHR¹C(O)OC₄-C₈-alkyl, preferably from the group consisting of -CH₂C≡N, -CHR¹C(O)OC₄-alkyl and -CHR¹C(O)OC₈-alkyl, with R¹ being selected from hydrogen and methyl.

7. The sorbent material according to any one of claims 1 to 6, wherein the linker moiety -L-represents -CH₂CHR²C(O)O(CH₂)₄OC(O)CHR³CH₂-, with R² and R³ being independently of each other selected from hydrogen and methyl.

8. The sorbent material according to any one of claims 1, 2, and 4 to 7, wherein the solid support is made of silica, alumina, zeolite, active carbon, polymer, or mixtures thereof.

9. A substituted branched polyethylenimine for producing the sorbent material according to any one of claims 1, 2, 5, 6, and 8, wherein said substituted branched polyethylenimine contains a residue of a branched polyethylenimine and a substituent -CH₂-R substituting an amine nitrogen contained by said residue, wherein -R is selected from the group consisting of -CH₂C≡N, and -CHR¹C(O)OC₄-C₁₂-alkyl, with R¹ being selected from hydrogen and methyl.

10. A process for manufacturing a sorbent material for separation, preferably isothermal separation, of carbon dioxide from a gas mixture, preferably from at least one of ambient atmospheric air, flue gas and biogas, comprising the following steps:
i) mixing a branched polyethylenimine, a cross-linking agent and a substitution reagent to obtain a mixture, wherein
the branched polyethylenimine has an average number molecular weight Mn from about 500 to about 11000 as determined by gel permeation chromatography;
the cross-linking agent is selected from the group consisting of CH₂=CH(R²)C(O)O(CH₂)ₙOC(O)CH(R³)=CH₂, trimethylolpropane tri(meth)acrylate, pentaerythritol tetra(meth)acrylate, and mixtures thereof, with n being an integer from 4 to 12, and R² and R³ being independently of each other selected from hydrogen and methyl; and
the substitution reagent is selected from the group consisting of CH₂=CH-C≡N, CH₂=CH-CHR¹C(O)OC₄-C₁₂-alkyl, and mixtures thereof, with R¹ being selected from hydrogen and methyl to obtain a cross-linked and substituted branched polyethylenimine; and optionally
ii) grinding the cross-linked and substituted branched polyethylenimine.

11. A sorbent material for separation, preferably isothermal separation, of carbon dioxide from a gas mixture, preferably from at least one of ambient atmospheric air, flue gas and biogas, obtained by the process according to claim 10.

12. A unit for separation, preferably isothermal separation, of carbon dioxide from a gas mixture, preferably from at least one of ambient atmospheric air, flue gas and biogas, comprising
a reactor unit containing the sorbent material according to any one of claims 1 to 8 and 10.

13. The unit according to claim 12, wherein the separation is continuous, and the unit further comprises at least one additional reactor unit containing the sorbent material.

14. A method for separating carbon dioxide from a gas mixture, preferably from at least one of ambient atmospheric air, flue gas and biogas, comprising at least the following steps (iii)-(iv) conducted in the order (iii)-(iv):
(iii) flowing a gas mixture containing carbon dioxide through a reactor unit containing the sorbent material according to any one of claims 1 to 8 and 11, at a first temperature between 0 °C and 70 °C, preferably between ambient temperature and 70 °C, to allow the carbon dioxide to adsorb on the sorbent material in the reactor unit and let flow through a gas mixture free of carbon dioxide;
(iv) isolating said reactor unit containing the carbon dioxide adsorbed on the sorbent material from the gas mixture; and
(v) desorbing the carbon dioxide at a second temperature between ambient temperature and 70 °C.

15. The method of claim 14, wherein the separation is isothermal and step (v) comprises desorbing the carbon dioxide by pressure swing and/or dilution with a gas effluent, preferably selected from carbon dioxide and nitrogen.
